# EUROPEAN PATENT APPLICATION

(11) **EP 2 112 507 A1**
(43) Date of publication of application: **28.10.2009**
(21) Application number: 08008009.6
(22) Date of filing: 25.04.2008
(51) Int. Cl.: G01N 30/02, G05D 23/02

(54) **Apparatus and method for direct resistive heating of conduits**

(71) Applicant: Varian B.V., 4330 Middelburg (NL)
(72) Inventor: van den Heuvel, Nils, 3815 AE Amersfoort (NL)
(74) Representative: Mollekopf, Gerd Willi

(57) **Abstract**

The invention discloses an apparatus for controlling a temperature of a flowing material, including a conduit (108) and a surrounding heater element (138). The heater element includes first and second end terminals (142, 144; 146, 148) through which an adjustable current is run. The heater element (138) is also utilized to take voltage and current measurements. An actual temperature derived from these measurements is compared to a set point temperature, from which the current to the heater element (138) is adjusted as needed to maintain a desired temperature. The first end terminal may include a current input terminal (142) and a first voltage measurement terminal (144), and the second end terminal may include a current output terminal (148) and a second voltage measurement terminal (146).

## Description

### FIELD OF THE INVENTION

The present invention relates generally to the controlled heating of conduits through which materials to be heated are flowed such as, for example, columns of the type employed in chromatography. More particularly, the invention relates to heating conduits such as chromatographic columns by controlled, direct resistive heating techniques.

### BACKGROUND OF THE INVENTION

It is often desirable to flow material through a conduit under controlled temperature conditions. One way to control the temperature of the flowing material is through heat exchange with the conduit. For instance, columns employed for chromatography, particularly gas chromatography (GC), should be temperature-controlled to realize an acceptable level of resolving efficiency in the separation of analytes. Such columns have conventionally been heated by being positioned in a temperature-controlled, forced-air heated convection oven.
The technology of direct resistive heating is currently being investigated as an alternative to oven-based heating. While oven-heated columns work well in many applications, the ovens are bulky, require large amounts of electrical power, and offer relatively slow rates of heating and cooling due to having a large thermal mass. On the other hand, direct resistive heating is comparatively more efficient and enables faster rates of change in column temperature. Direct resistive heating typically entails the application of a temperature-controlled electrical current through a conductive coating, film, or other type of layer applied to the chromatographic column. In GC applications, the technology of direct resistive heating may be implemented so as to entirely omit the requirement of a GC oven. Thus, direct resistive heating may result in a significant savings in cost of goods and power requirements, and facilitate the design of portable and even hand-held GC instruments. Moreover, direct resistive heating enables fast temperature ramping of chromatographic columns, thus enabling fast chromatographic applications and particularly fast-GC applications.

A chromatographic column has been developed that includes a fused silica column at its core. Typically, the column is of a capillary-scale size (e.g., mm or µm). The capillary is surrounded by a polymer film, which in turn is uniformly coated with a thin heater film. The heater film may be constructed of a suitable thermally and electrically conductive material such as a metal. The heater film is in turn surrounded by another polymer film such that the heater film is concentrically interposed between the two polymer films. Electrical terminals contact the heater film to enable communication with a power supply. The temperature of such a column may be measured and controlled by the fact that the resistance of the conductive material employed for the heater film increases with temperature. Thus, the power supply may operate in conjunction with a temperature control circuit that monitors the temperature of the heater film and makes adjustments in accordance with a desired set-point temperature or programmable temperature profile. Typically in the past, the temperature control circuit has been configured to vary the voltage applied across the heater film and thus the current through the heater film. The column itself, then, may be utilized as its own temperature sensor, thereby avoiding the need for attaching temperature sensors to the column, which could result in local cold spots and consequently inaccurate temperature measurement.

As an alternative to providing a heater film, a resistively heated wire may be positioned along the length of the column and may be wrapped around the column in a helical manner. To measure temperature, a tubular member also runs along the length of the column. One end of the tubular member is sealed while the other end communicates with a pressure transducer. In such a configuration, changes in temperature correlate with changes in pressure in the tubular member. The pressure transducer responds to the pressure changes by producing an output signal that is correlated to the temperature. As an alternative to the tubular member and pressure transducer, an optical fiber may be positioned along the length of the column and coupled to laser electronics, again in combination with the resistively heated wire. In this latter case, an output signal indicative of temperature is based on a combination of the phase change in the optical fiber resulting from laser modulation and the thermally-induced phase change in the fiber itself. As further alternatives, a resistance temperature device (RTD) in wire form or a thermocouple may be provided in combination with the resistively heated wire.

It is recognized that there is an ongoing need for improvements in the technology of direct resistive heating technology as applied to chromatographic columns and other types of conduits. Such improvements may include one or more of the following: fast chromatographic analysis, fast thermal cycling, accurate and uniform temperature measurement and control, high resolution, minimal power and other system requirements, minimal cost of goods, miniaturization and/or portability.

### SUMMARY OF THE INVENTION

To address the foregoing problems, in whole or in part, and/or other problems that may have been observed by persons skilled in the art.
The invention is defined in claims 1 and 10, respectively.
Particular embodiments are set out in the dependent claims.
The present disclosure provides apparatus, devices, systems and/or methods relating to proportional valves, as described by way of example in implementations set forth below.

According to one implementation, an apparatus for controlling a temperature of a flowing material includes a conduit including an input end region and an output end region.
An electrically resistive heater element surrounds a length of the conduit. The heater element includes a first end located in the input end region, a second end located in the output end region, a first end terminal located at the first end, and a second end terminal located at the second end. The heater element is configured to conduct a heater current from the first end terminal to the second end terminal.

According to another implementation, the apparatus further includes a heater controller in signal communication with the first end terminal and configured to control a level of heater current fed to the first end terminal based on a set point temperature.

According to another implementation, the apparatus further includes a heater controller configured to calculate an actual heater temperature based on signals received from the first and second end terminals and the first end terminal, and to control the level of heater current fed to the first end terminal based on a difference between the calculated actual heater temperature and a set point temperature.

According to another implementation, the apparatus further includes a heater voltage measuring device in signal communication with the first and second end terminals, and a heater current measuring device in signal communication with the second end terminal.

According to another implementation, the apparatus further includes a heater temperature controller communicating with the first and second end terminals.

According to another implementation, the first end terminal includes a heater current input terminal and a first voltage measurement terminal. The second end terminal includes a heater current output terminal and a second voltage measurement terminal.

According to another implementation, a chromatographic apparatus includes a column, a detector, a column heater, and a system controller. The column includes a sample inlet, a sample outlet, and an electrically resistive heater element surrounding a length of the column. The detector is in flow communication with the sample outlet. The column heater controller is in signal communication with the heater element. The system controller is configured to transmit detector excitation signals to the detector, receive detector measurement signals from the detector, transmit heater control signals to the column heater controller, and receive column heater measurement signals from the heater element indicative of column temperature.

According to another implementation, the heater element of the chromatographic apparatus includes a heater current input terminal in signal communication with the column heater controller, a heater current output terminal communicating with the system controller, and first and second heater voltage measurement terminals located at opposite ends of the heater element and communicating with the system controller.

According to another implementation, a method is provided for controlling a temperature of material flowing through a conduit. A heater current is run through a resistive heater element surrounding a length of the conduit via a first end terminal located at a first end of the heater element and a second end terminal located at an opposite, second end of the heater element. A heater voltage is measured across the heater element by operating a voltage measurement device in signal communication with the first and second end terminals. The heater current is measured by operating a current measurement device in signal communication with the second end terminal. An actual temperature of the heater element is calculated based on the measured heater voltage and heater current. A determination is made as to whether the actual temperature differs from a set point temperature. If so, the heater current fed to the first end terminal is adjusted.

### BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.

Figure 1 is a schematic view representative of an example of a GC apparatus or system.

Figure 2 is a cross-sectional view of an example of a column adapted for direct resistive heating that may be utilized in a chromatographic apparatus or system such as, for example, the GC apparatus or system illustrated in Figure 1.

Figure 3 is a cross-sectional view of a column adapted for direct resistive heating such as, for example, the column illustrated in Figure 2, showing cross-sectional details of an inlet end region and an outlet end region of the column and terminal connections provided in these regions.

### DETAILED DESCRIPTION OF THE INVENTION

In general, the term "communicate" (for example, a first component "communicates with" or "is in communication with" a second component) is used herein to indicate a structural, functional, mechanical, electrical, optical, magnetic, ionic or fluidic relationship between two or more components or elements. As such, the fact that one component is said to communicate with a second component is not intended to exclude the possibility that additional components may be present between, and/or operatively associated or engaged with, the first and second components.

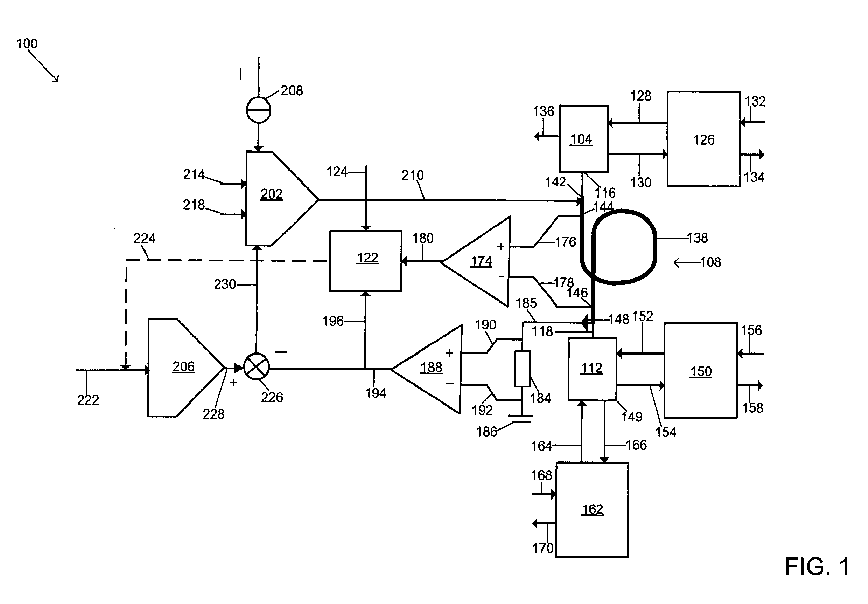

The subject matter disclosed herein generally relates to systems, apparatus, devices, instruments, processes and methods related to temperature control in the context of material flowing through conduits. Examples of implementations relating to the invention are described in more detail below with reference to Figures 1 - 3. These examples are provided in the context of gas chromatography (GC), but it will be recognized that the broad aspects of the invention may be applicable to other types of chromatography and to analytical instruments in general, as well as other types of applications involving temperature-controlled gas flow though a conduit and resistively-heated conduits in general.

Figure 1 is a schematic view representative of an example of a GC apparatus or system **100.** The GC system **100** includes a sample inlet device such as an injector **104** in flow communication with a chromatographic column **108,** which in turn is in flow communication with a detector **112.** The injector **104** introduces a carrier gas carrying sample gas components into an inlet **116** of the column **108.** The column **108** may be configured in a known manner for analytically separating the differing components of the sample gas as the matrix of carrier and sample gases flows through the column **108** to an outlet **118** of the column **108.** The combined carrier gas and sample gas are eluted from the outlet **118** to the detector **112,** with the flow of differing bands or peaks of the sample gas being spatially and temporally separated. As described below by way of examples, the column **108** includes a heater element that transfers heat to the column **108** and thus the material flowing through the column **108.**

As also described below by way of examples, the GC system **100** further includes a control device and/or circuitry which, through communicating with four terminals of the heater element of the column **108,** provides means for measuring the temperature of the heater element (and thus the column **108** and the material flowing through the column **108**) and controlling the electrical current driving the heater element. At one or more given instances of time, this control device and/or circuitry determines whether the measured temperature deviates from a desired set point temperature, and if so, adjusts the drive current being fed to the heater element of the column **108** to correct for the deviation (i.e., error or difference). The control device and/or circuitry may be embodied in a heater element (or column) temperature controller (or simply heater controller) and a heater element (or column) temperature measuring device or circuitry. The control device and/or circuitry may further include or be embodied in a system controller such as, for example, an electronic controller that may be processor-based. The system controller may also control other components, circuits, or functions of the GC system **100.**

In the context of the present disclosure, the heater controller and heater element temperature measuring device or circuitry may be considered as being either integrated or separate but in communication with each other, emphasis being placed instead on their functions and communication with the heater element. Likewise, the heater controller and heater element temperature measuring device or circuitry may be considered as being integrated with the system controller or separate but in communication with the system controller. Furthermore, it will be understood that the control components of the GC system **100** may be configured to maintain a desired constant temperature of the heater element of the column **108,** or maintain a desired time-dependent temperature profile of the heater element as dictated by the intended use of the column **108.** Accordingly, "temperature" is taken to mean either a constant value over time, or an instantaneous value that is one of a plurality of possibly differently valued temperatures comprising a temporal-based variable temperature profile.

In the example provided in Figure 1, the GC system **100** includes a system controller schematically represented by an arbitrarily located functional block **122.** The system controller **122** may be in signal communication with many of the components of the GC system **100** as described below. The system controller **122** may include an electronic portion, which may include a central processing unit (CPU), memory, and other components, devices or circuitry as needed for operating the GC system **100,** including controlling (e.g., initiating, synchronizing, coordinating, monitoring, etc.) the operations of various modules of the GC system **100.** A temperature set point may be provided as an input **124** to the system controller **122** to control the temperature of the column **108,** as further described below. Generally, the system controller **122** may represent one or more computing or electronic-processing devices, and may include analog and/or digital circuitry, hardware, firmware, and/or software attributes. As examples, the system controller **122** may include a microcontroller, microprocessor, processor, application specific integrated circuit (ASIC), digital signal processor (DSP), computer, or the like. It will be understood that the various signal communication lines referred to in the ensuing description, although depicted as single lines in Figure 1, may actually represent one or more wires or one or more wireless links where applicable.
Moreover, some signal communication lines may be depicted incompletely or omitted for clarity.

The injector **104** may be configured to vaporize a sample material, or to heat a sample material pre-existing in a gaseous phase, to a desired temperature prior to introduction into the column **108.** In the illustrated example, a heater regulator **126** controls the heating function of the injector **104.** For this purpose, depending on the design of the injector **104,** the heater regulator **126** may provide electrical power or a flow of heating gas to the injector **104** via a line **128** and receive a measurement signal indicative of the temperature of the injector **104** via a line **130.** An injector setting depicted by a line **132** determines the level of input (e.g., current, voltage, flow rate or pressure of a heating gas, etc.) fed from heater regulator **126** to the injector **104** over line **128** required for operating the injector **104** at a desired temperature. The injector setting may be manually adjusted, in which case the line **132** represents a user-input such as may be implemented by a potentiometer, a keypad, etc. Alternatively, the injector setting may be provided by the system controller **122,** in which case the line **132** represents a control signal received from the system controller **122.** Additionally, the heater regulator **126** may output a signal over a line **134** indicative of the actual temperature of the injector **104.** The signal on line **134** may be based on the signal received over line **130.** The output on line **134** may represent a visible readout or display. Alternatively or additionally, the output on line **134** may be provided to the system controller **122,** in which case the system controller **122** may compare the actual (measured) injector temperature to a desired set-point temperature for the injector **104,** determine the error, and send an appropriate control signal to the heater regulator **126** over line **132.** The injector **104** may also include an injector start signal provided over a line **136.** The line **136** may represent a manual injector start control device or, alternatively, may represent a signal communication with the system controller **122** that enables the system controller **122** to synchronize the operation of the injector **104** with other functions of the GC system **100.**

Generally, the column **108** may have any configuration suitable for implementing direct resistive heating of the column **108.** In one example, the column **108** may be constructed of a suitable dielectric material such as fused silica, glass, Teflon^{®}, or the like, the interior of which is impregnated, coated or packed with a suitable stationary phase. Typically, the size of the column **108** is on the capillary (e.g., mm or µm) scale. Additionally, the column **108** may be coated or surrounded by a suitable thermally- and electrically-conductive material (e.g., a metal such as aluminum, copper, nickel, nichrome or other alloys) that serves as the heating element for the column **108.** The heating element is shown schematically in Figure 1 and designated **138.** The heating element **138** may run along the entire length or a partial length of the column **108;** typically, the heating element **138** runs along a majority of the length of the column **108** as needed to provide effective heat transfer to and temperature control of the material flowing through the column **108.** A first end terminal (one or more electrical contacts) is provided at or near the end of the heater element **138** that is located at one end or at least in the end region of the column **108** (typically at or near the column inlet **116).** In some implementations, the first end terminal includes two separate terminals or connection points **142** and **144.** Likewise, a second end terminal (one or more electrical contacts) is provided at or near the end of the heater element **138** that is located at the other end or at least in the other end region of the column **108** (typically at or near the column outlet **118).** In some implementations, the second end terminal includes two separate terminals or connection points **146** and **148.** Here, the term "end region" means the region of the column **108** that includes the very end (inlet **116** or outlet **118)** of the column **108** as well as a portion of the column **108** proximate to the very end. Moreover, for convenience, the term "at" is taken to mean either "directly at," "near," or "proximate." The ends of the heating element **138** are respectively located within the end regions of the column **108.** That is, insofar as the heating element **138** need not run along the entire length of the column **108** in every implementation, the terminals **142, 144, 146** and **148** do not all need to be located directly at the inlet **116** or outlet **118** of the column **108** but rather may be located near the inlet **116** or outlet **118.** Likewise, the terminals **142, 144, 146** and **148** may be located at the corresponding ends of the heater element **138,** or alternatively near the ends of the heater element **138.** Electrical current is run through the heater element **138** via the terminals **142** and **148** to resistively heat the heater element and thus the column **108** as well as the material flowing through the column **108** via known mechanisms of heat transfer. The terminals **144** and **146** are utilized to measure the column temperature as described below.

The detector **112** may be any detector suitable for analytical separation processes. Generally, the detector **112** receives the fluent output of the column **108,** makes the appropriate measurements, and outputs raw chromatographic data (encoded in electrical signals) to suitable post-detection processing/data acquisition circuitry embodied in, for example, the system controller **122.** For this purpose, the detector **112** may, for example, include a flame ionization detector (FID), a thermal conductivity detector (TCD), an electron capture detector (ECD), a thermionic specific detector (TSD), a pulsed flame photometric detector (PFPD), etc.

In the present example, the implementation of the detector **112** is based on a TCD that includes a four-element bridge circuit. The bridge circuit may have a Wheatstone resistance-bridge configuration in which one or more of the elements of the bridge are variable. One or more of the legs of the bridge circuit may include a temperature-sensitive element such as a resistor or thermistor. The nominal resistances of all elements of the bridge are ideally equal. Typically, the temperature-sensitive elements are heated uniformly to an initial equilibrium condition. An excitation signal (current or voltage, DC or AC) is fed to the input nodes of the bridge. In one example, one or both elements (the sample elements) of an opposing pair of legs of the bridge may be exposed to the effluent (carrier and sample gases) flowing from the output **118** of the column **108.** One or both elements (the reference elements) of the other opposing pair of legs of the bridge may be exposed to a flow of pure carrier gas, such as by diverting a portion of the supply of carrier gas prior to combination with the sample gas at the injector **104** and routing this pure carrier gas flow to the detector **112** separately from the column **108.** In this example, the pure carrier gas flow may serve as a reference for balancing the bridge in the absence of sample analytes eluting from the column **108.** That is, when all sample elements and reference elements of the bridge are exposed to the same gas composition, their temperatures and thus their resistances are equal, resulting in a zero signal at the output nodes of the bridge. Subsequently, in response to the combined carrier/sample effluent from the column **108** flowing over the sample element(s), the temperature and thus resistance of the sample element(s), and thus also current flow through the sample element(s), change relative to the reference elements that remain exposed only to the pure carrier gas. This detection of the carrier/sample effluent unbalances the bridge and results in an output signal that may be correlated to the concentration of the sample components eluting from the column **108.**

As illustrated by example in Figure 1, the detector **112** may include a housing or detector block **149** in which internal gas passages, flow cells, bridge elements or the like may be located. This detector block **149** may be heated by a heater regulator **150.** For this purpose, the heater regulator **150** may provide electrical power to the detector **112** via a line **152** and receive a measurement signal indicative of the temperature of the detector **112** via a line **154.** A detector setting depicted by a line **156** determines the level of input fed from the heater regulator **150** to the detector **112** over line **152** required for operating the detector **112** at a desired reference temperature. The detector setting may be manually adjusted, in which case the line **156** represents a user-input such as may be implemented by a potentiometer, a keypad, etc. Alternatively, the detector setting may be provided by the system controller **122,** in which case the line **156** represents a control signal received from the system controller **122.** Additionally, the heater regulator **150** may output a signal over a line **158** indicative of the actual temperature of the detector **112.** The signal on line **158** may be based on the signal received over line **154.** The output on line **158** may represent a visible readout or display. Alternatively or additionally, the output on line **158** may be provided to the system controller **122,** in which case the system controller **122** may compare the actual (measured) detector temperature to a desired set-point temperature for the detector block **149,** determine the error, and send an appropriate control signal to the heater regulator **150** over line **156.**

As also illustrated by example in Figure 1, a detector controller **162** may be provided to control the detector **112.** In the present example, the detector controller **162** is a bridge controller. The detector (bridge) controller **162** may be considered as being part of the detector **112,** or may be considered separately from the detector **112.** To control the detector **112,** the bridge controller **162** may provide a suitable excitation signal (current or voltage, DC or AC) to the input nodes of the detector **112** via a line **164** and receive a measurement signal indicative of sample concentration from the output nodes of the detector **112** via a line **166.** The excitation signal may be utilized to heat the resistive bridge elements of the detector **112.** An excitation setting depicted by a line **168** determines the level of excitation applied by the bridge controller **162** to the detector **112** over line **164.** The excitation setting may be manually adjusted, in which case the line **168** represents a user-input such as may be implemented by a potentiometer, a keypad, etc. Alternatively, the excitation setting may be provided by the system controller **122,** in which case the line **168** represents a control signal received from the system controller **122.** Additionally, the bridge controller **162** may output a sensor reading signal over a line **170** indicative of the measurement taken by the detector **112.** In a case where the bridge controller **162** includes an instrumentation amplifier, the signal on line **170** may be an amplification of the signal received over line **166.** More generally, the amplifier utilized to amplify the output of the detector **112** may be embodied elsewhere in the GC apparatus **100,** such as in the system controller **122** or suitable signal processing or data acquisition circuitry. The output on line **170** may represent a visible readout or display, or electrically, magnetically or electromagnetically (e.g., wirelessly, optically, etc.) formatted information that may subsequently be transmitted to a readout or display device. Alternatively, prior to providing a readout or display of the acquired chromatographic data, the output on line **170** may be provided as necessary to post-detection signal conditioning and processing circuitry. Some or all of such post-detection circuitry, as well as a readout or display device, may be embodied in the bridge controller **162** and/or the system controller **122** or separate circuitry.

The heating element **138** of the column **108** may be utilized to monitor as well as control the temperature of the column **108.** The terminals **144** and **146** of the heating element **138** may communicate with a voltage measuring device. As an example, the terminals **144** and **146** may be placed in signal communication with the non-inverting and inverting inputs of an instrumentation amplifier **174** via lines **176** and **178,** respectively. By this configuration, the instrumentation amplifier **174** measures the voltage across the effective resistance of the heating element **138** and produces an output signal on a line **180** indicative of the column (or heater) voltage. In addition, terminal **148** may communicate with a current measuring device. As an example, a current-sensing element **184** (typically a resistive element) may be placed essentially in series with the heating element **138,** as schematically depicted by a line **185,** such that the current-sensing element **184** is interconnected between the terminal **148** and a suitable ground or reference point or plane **186.** The current-sensing element **184** may be placed in signal (parallel) communication with the non-inverting and inverting inputs of another instrumentation amplifier **188** via lines **190** and **192,** respectively. By this configuration, the instrumentation amplifier **188** measures the voltage across the current-sensing element **184,** which is proportional to the current through the heating element **138** of the column **108.** The instrumentation amplifier **188** thus produces an output signal on a line **194** indicative of the column (or heater) current. Based on the output signals received on lines **180** and **194** (or a line **196** schematically branching off line **194**), the system controller **122** utilizes the measured values for column voltage and column current to determine the resistance of heater element **138,** and thus the temperature of the heater element **138** through a known correlation between resistance and temperature specific to the material of the heater element **138.**

The GC system **100** further includes a device or circuitry configured to control the current supplied to the heating element **138** and thus control the temperature of the column **108.** For this purpose, as described above, the system controller **122** may receive readings for column voltage and column current over lines **180** and **194** (or **196**), respectively, and utilize these values to calculate the instantaneous or actual temperature of the column **108** (heater element **138**). Additionally, the system controller **122** may receive a set-point temperature value (or a set of values constituting a programmed temperature profile) over line **124.** Accordingly, in one implementation, the system controller **122** may compare the measured temperature of the column **108** with the set-point temperature and calculate a temperature error. Based on this temperature error, the system controller **122** or other portion of the control device or circuitry of the GC system **100** may then adjust the current fed to the heating element **138** as needed to control the temperature of the column **108.** Here, it will be understood that the decision to adjust the heater current may be based on whether the actual measured temperature differs from the set point temperature by a certain amount (e.g., ± 0.5 %), depending upon the precision desired for the control of temperature. That is, the control device or circuitry may be configured to adjust the heater current at a given instance of time only if the calculated temperature error exceeds a predefined minimum acceptable range of temperature error (e.g., ± 0.5 %).

In one example, the GC system **100** may include a heater current regulator or other current control device **202** and a current-setting device **206.** As an example, the heater current regulator **202** may include or be embodied in a switching regulator. Both the switching regulator **202** and the current-setting device **206** may communicate with the system controller **122** to implement their functions, and each may include a digital-to-analog converter (DAC) and/or other components as needed or desired to implement their functions as appreciated by persons skilled in the art. A current source **208** supplies a source current to the switching regulator **202.** The switching regulator **202** regulates the input from the current source **208** so as to supply the required level of heater current to the heating element **138** via a line **210** in signal communication with the terminal **142** of the heating element **138.** The switching regulator **202** may receive a control signal over a line **214** for enabling the switching regulator **202** to actively supply heating power to the column **108.** The switching regulator 202 may also receive a control signal over a line **218** for synchronizing the supply of heating power in accordance with a predetermined operating temperature or temperature profile (program) of the column **108,** and/or for synchronizing the supply of heating power with other functions or operations of the GC system **100.** The current-setting device **206** may receive a control signal over a line **222** that sets a desired level of current or current curve to be applied to the column **108** and thus the desired temperature or temperature profile of the column **108.** The line **222** may represent a manual input or adjustment or a control signal received from the system controller **122** as schematically depicted by a line **224.** The current-setting device **206** outputs an analog current set-point signal to a suitable comparator **226** via a line **228.** The comparator **226** also receives the signal indicative of measured column current over the line **194.** Based on the actual and set-point signals provided by the amplifier **188** and the current-setting device **206,** respectively, the comparator **226** outputs a current error signal to the switching regulator **202** via a line **230.** Thus, in this example, the current error or difference is utilized to control the operation of the switching regulator **202** in supplying the heating power to the column **108** as required by the temperature set point provided at line **124.** Stated in another way, the switching regulator **202** utilizes the received current error to adjust or vary the level of current supplied to the column **108** from the current source **208.** In one implementation, the system controller **122** may determine whether the current set-point needs to be updated based on the measured column temperature and column voltage values and then feed the new current set point to the current-setting device **206** via the line **224.** Alternatively, the functions of the current-setting device **206** and the comparator **226,** including any necessary digital-to-analog conversion, may be integrated with the system controller **122.** It will be understood that the decision to adjust the heater current may be based on whether the actual measured current differs from the set-point current by an amount exceeding a predetermined minimum acceptable range of current error.

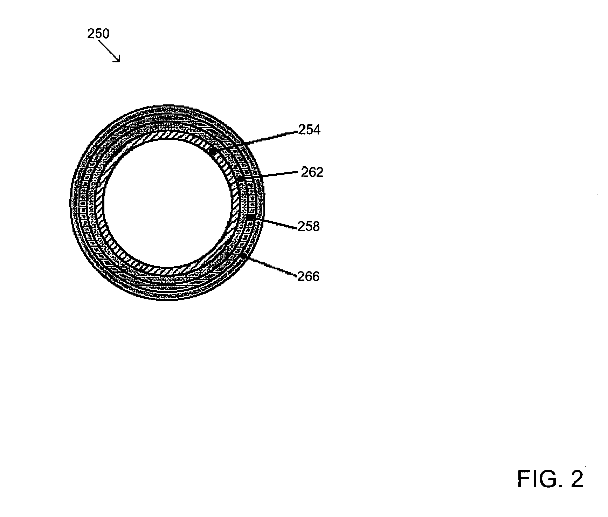

Figure 2 is a cross-sectional view of an example of a column or other type of conduit **250** adapted for direct resistive heating that may be utilized, for example, in a chromatographic system according to the present disclosure. For example, the column **250** may correspond to the column **108** shown in the GC system **100** illustrated in Figure 1. The column **250** may include a column **254** (e.g., an inner column, core, tube, capillary, etc.) constructed of a suitable dielectric material such as fused silica, glass, Teflon^{®} or the like. The column **254** or its inner surface may be impregnated, coated or packed with a suitable stationary phase for chromatography purposes. The column **250** may include an electrically resistive heater element (or layer, film, coating, or the like) **258** surrounding the entire or a significant portion of the length of the column **254.** The electrically resistive layer **258** serves as a heater element for heating the column **254** and thus the gases flowing through the column **254.** The electrically resistive layer **258** may be applied or formed by any suitable technique such as bonding, coating, deposition, etc. In some implementations, a thermally conductive layer **262** of a material such as a suitable polymer may be concentrically interposed between the column **254** and the electrically resistive layer **258** to optimize heat transfer from the electrically resistive layer **258** to the column **254.** An outer layer **266** of a thermally insulating (or thermally and electrically insulating) material may surround the electrically resistive layer **258** to protect and/or thermally isolate the column **254** and electrically resistive layer **258.** In one example, the electrically resistive layer **258,** or the electrically resistive layer **258** in combination with the thermally conductive layer **262,** may correspond to the heating element **138** schematically shown in Figure 1.

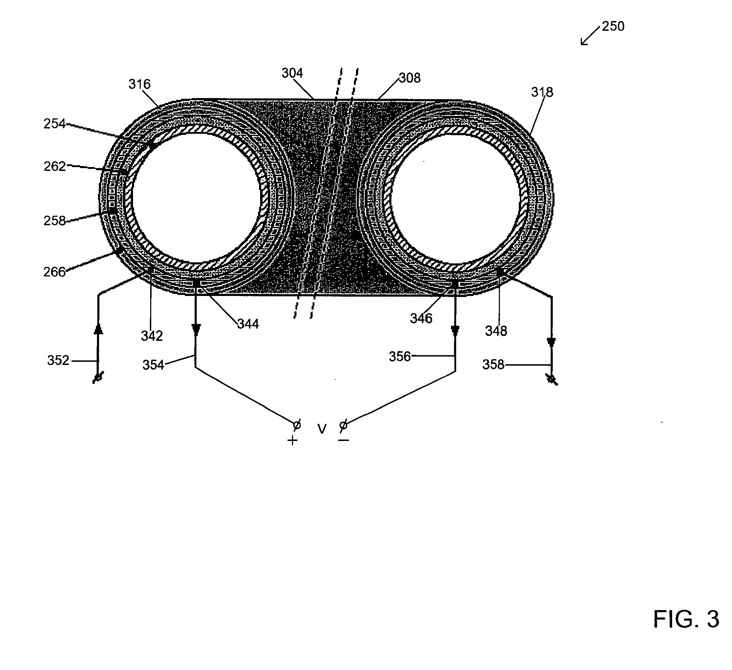

Figure 3 is a view of the column **250** showing details of the four-terminal connection according to an implementation. Specifically, Figure 3 illustrates both an inlet end region **304** of the column **250** into which gases are admitted such as from an injector (e.g., the injector **104** illustrated in Figure 1), and an outlet end region **308** of the column **250** from which separated gas components are eluted such as into a detector (e.g., the detector **112** illustrated in Figure 1). The column **250** is shown in cross-section at an end **316** of the electrically resistive layer **258** located within the inlet end region **304,** and also at an opposite end **318** of the electrically resistive layer **258** located within the outlet end region **308.** As noted previously, the ends **316** and **318** of the electrically resistive layer **258** may be located at or near the inlet and outlet ends of the column **250.** It is seen from the cross-sections of the ends **316** and **318** that the column **250** may be structured as described above and illustrated in Figure 2.

Terminals **342** and **344** are provided in electrical communication with the electrically resistive layer (heater element) **258** at the end **316** or at some position in the inlet end region **304** near the end **316,** and terminals **346** and **348** are provided in electrical communication with the electrically resistive layer (heater element) **258** at the other end **318** or at some position in the outlet end region **308** near this end **318.** The terminals **342** and **348** serve as the heater current input and heater current output terminals, respectively, for providing heating power to the electrically resistive layer **258.** The terminals **344** and **346** serve as the terminals for taking measurements of column (heater) voltage V, i.e., the voltage across the length of the electrically resistive layer **258.** By example, Figure 3 illustrates the terminals **342** and **344** as being located at the same lengthwise position of the column **250** but circumferentially spaced from each other. However, the terminals **342** and **344** may be located at different lengthwise positions within the inlet end region **304.** For example, one of the terminals **342** or **344** may be located at (or near) the end **316** while the other terminal **344** or **342** is located farther away from the end **316** by some distance. Similarly by example, Figure 3 illustrates the terminals **346** and **348** as being located at the same lengthwise position of the column **250** but circumferentially spaced from each other. However, the terminals **346** and **348** may likewise be located at different lengthwise positions within outlet end region **308.** Generally, the terminals **342, 344, 346** and **348** are positioned as needed to properly implement the functions of controllably heating the gases flowing through the column **250** and accurately taking measurements of column voltage and current. The terminals **342, 344, 346** and **348** represent the terminations of suitable electrical interconnects **352, 354, 356** and **358,** respectively, such as wires. The terminals **342, 344, 346** and **348** may be connected in electrical communication with the electrically resistive layer **258** by any suitable means that avoids problems such as cold spots or thermocouple effects, such as by utilizing conductive glue. The terminals **342, 344, 346** and **348** may generally correspond to the respective terminals **142, 144, 146** and **148** shown in Figure 1. The interconnects **352, 354, 356** and **358** may respectively correspond to, or be placed in electrical communication with, the lines **210, 176, 178** and **185** shown in Figure 1.

As noted previously, it will be understood that the terminals **342** and **344** may be combined as a single first end terminal that communicates with both interconnects **352** and **354.** Likewise, the terminals **346** and **348** may be combined as a single second end terminal that communicates with both interconnects **356** and **358.**

It will be further understood that various aspects or details of the invention may be changed without departing from the scope of the invention. Furthermore, the foregoing description is for the purpose of illustration only, and not for the purpose of limitation - the invention being defined by the claims.

## Claims

1. An apparatus (108/254, 138/258, 122, 202) for controlling a temperature of a flowing material, the apparatus comprising:
a conduit (108, 254) including an input end region (116, 304) and an output end region (118, 308); and
an electrically resistive heater element (138, 258) surrounding a length of the conduit (108, 254), the heater element (138, 258) including a first end (316) located in the input end region (116, 304), a second end (318) located in the output end region (118, 308), a first end terminal (142, 144; 342, 344) located at the first end (316), and a second end terminal (146, 148; 346, 348) located at the second end (318),
wherein the heater element (138, 258) is configured to conduct a heater current from the first end terminal (142, 144; 342, 344) to the second end terminal (146, 148; 346, 348), and to output heater measurement signals from the first and second end terminals (142, 144; 342, 344; 146, 148; 346, 348) indicative of a temperature of the heater element.

2. The apparatus of claim 1, further including a heater controller (122, 174, 188, 202, 206, 226) in signal communication with the first end terminal (142, 144; 342, 344) and configured to control a level of heater current fed to the first end terminal based on a set point temperature.

3. The apparatus of claim 2, wherein the heater controller (122, 174, 188, 202, 206, 226) includes a heater temperature measurement device configured to calculate an actual heater temperature based on signals received from the first and second end terminals (142, 144; 342, 344; 146, 148; 346, 348) and calculate a temperature difference between the calculated actual heater temperature and the set point temperature, and the heater controller is configured to control the level of heater current fed to the first end terminal (142, 144; 342, 344) based on the temperature difference.

4. The apparatus of claim 1, 2 or 3, further including a heater voltage measuring device (174) in signal communication with the first and second end terminals (142, 144; 342, 344; 146, 148; 346, 348) and a heater current measuring device (184, 188) in signal communication with the second end terminal (146, 148; 346, 348).

5. The apparatus according to claim 1, further including:
a detector (112) in flow communication with the output end region (118, 308);
a column heater controller (202) in signal communication with the heater element (138, 258); and
a system controller (122) configured to transmit detector excitation signals to the detector (112), receive detector measurement signals from the detector, transmit heater control signals to the column heater controller (202), and receive column heater measurement signals from the heater element (138, 258) indicative of column temperature.

6. The apparatus of claim 5, further including a sample injector (104) in flow communication with the sample inlet (116, 304) and an injector heater regulator (126) communicating with the sample injector (104), wherein the system controller (122) is configured to transmit injector heater regulator control signals to the injector heater regulator (126) and receive injector heater regulator measurement signals from the injector heater regulator indicative of injector temperature.

7. The apparatus of claim 5 or 6, further including a detector heater regulator (162) communicating with the detector (112), wherein the system controller (122) is configured to transmit detector heater regulator control signals to the detector heater regulator (162) and receive detector heater regulator measurement signals from the detector heater regulator (162) indicative of detector temperature.

8. The apparatus of any of claims 5 to 7, including a column voltage measurement device (174) and a column current measurement device (184, 188), the column voltage measurement device and column current measurement device configured to transmit column heater measurement signals to the system controller (122) indicative of column temperature.

9. The apparatus of any of claims 1 to 8, wherein the first end terminal (142, 144; 342, 344) includes a heater current input terminal (142, 342) and a first voltage measurement terminal (144, 344), and the second end terminal (146, 148; 346, 348) includes a heater current output terminal (148, 348) and a second voltage measurement terminal (146, 346).

10. A method for controlling a temperature of material flowing through a conduit (108, 250), the method comprising:
running a heater current through a resistive heater element (138, 258) surrounding a length of the conduit (108, 250) via a first end terminal (142, 144; 342, 344) located at a first end of the heater element (138, 258) and a second end terminal (146, 148; 346, 348) located at an opposite, second end of the heater element;
measuring a heater voltage across the heater element (138, 258) by operating a voltage measurement device (174) in signal communication with the first and second end terminals (142, 144; 342, 344; 146, 148; 346, 348);
measuring the heater current by operating a current measurement device (184, 188) in signal communication with the second end terminal (146, 148; 346, 348);
calculating an actual temperature of the heater element (138, 258) based on the measured heater voltage and heater current;
determining whether the actual temperature differs from a set point temperature; and
if the actual temperature differs from the set point temperature, adjusting the heater current fed to the first end terminal (142, 144; 342, 344).

11. The method of claim 10, wherein determining and adjusting include operating a system controller (122) in signal communication with the voltage measurement device (174), the current measurement device (184, 188), and a heater current regulator (202), the heater current regulator being in signal communication with the first end terminal (142, 144; 342, 344).

12. The method of claim 10 or 11, wherein adjusting includes calculating a current difference between the measured heater current and a set point current, and regulating a source current based on the calculated current difference.

13. The method of claim 10 or 12, further including operating a system controller (122) in signal communication with the voltage measurement device (174), the current measurement device (184, 188), and a heater current regulator (202), to determine whether the actual temperature differs from the set point temperature and adjust the heater current, the heater current regulator (202) being in signal communication with the first end terminal (142, 144; 342, 344), and further operating the system controller (122) to control a detector (112) in flow communication with an outlet of the conduit (138, 258).

14. The method of claim 13, further including operating the system controller (122) to control the heating of an injector (104) in flow communication with an inlet (116, 304) of the conduit (138, 258).

15. The method of any of claims 10 to 14, wherein the heater current is run from a heater current input terminal (144; 342) located at the first end (116, 304) to a heater current output terminal (148; 348) located at the second end (118, 308), the voltage measurement device (174) is operated in signal communication with a first heater voltage measurement terminal (144, 344) located at the first end (116, 304) and a second heater voltage measurement terminal (146, 346) located at the second end (118, 308), the current measurement device (184, 188) is operated in signal communication with the heater current output terminal (148, 348), and the adjusted heater current is fed to the heater current input terminal (142, 342).
